# EUROPÄISCHE PATENTSCHRIFT

(11) **EP 1 214 379 B1**
(45) Veröffentlichungstag und Bekanntmachung des Hinweises auf die Patenterteilung: **19.12.2007**
(21) Anmeldenummer: 00956474.1
(22) Anmeldetag: 22.08.2000
(51) Int. Cl.: C08L 69/00, C08K 5/5353, C08K 5/5357

(54) **FLAMMWIDRIGE POLYCARBONAT-BLENDS**
FLAME-RESISTANT POLYCARBONATE BLENDS
MELANGES DE POLYCARBONATE IGNIFUGEANTS

(30) Priorität: 02.09.1999 DE 19941822
(43) Veröffentlichungstag der Anmeldung: 19.06.2002
(73) Patentinhaber: Bayer MaterialScience AG, 51368 Leverkusen (DE)
(72) Erfinder: ZOBEL, Michael, D-40547 Düsseldorf (DE); ECKEL, Thomas, D-41540 Dormagen (DE); DERR, Torsten, D-41542 Dormagen (DE); WITTMANN, Dieter, D-51375 Leverkusen (DE)
(86) Internationale Anmeldenummer: PCT/EP2000/008169
(87) Internationale Veröffentlichungsnummer: WO 2001/018120

(56) Entgegenhaltungen:
- EP-A- 0 315 868
- EP-A- 0 482 451
- US-A- 5 844 028

## Beschreibung

Die vorliegende Erfindung betrifft thermoplastische Polycarbonat-Blends, die Phosphanatamine und spezielle, mittels Redox-Initiatorsystemen hergestellte Pfropfpolymerisate enthalten und sich durch sehr gute mechanische Eigenschaften auszeichnen.

US-P 4 073 767 und US-P 5 844 028 beschreiben cyclische Phosphorverbindungen einschließlich Phosphorinan-Ringe als geeignete Flammschutzmittel für Polyurethane, Polycarbonate, Polyester und Polyamide. In US-P 4 397 750 werden bestimmte cyclische Phosphonatester als effiziente Flammschutzmittel für Polypropylen und andere Polyolefine beschrieben. In US-P 5 276 066 und US-P 5 844 028 werden bestimmte (1,3,2-Dioxaphosphorinanmethan)-Amine beschrieben, die geeignete Flammschutzmittel für Polyurethane, Polyester, Styrolpolymere, PVC, PVAc oder Polycarbonat darstellen.

US-P 3 505 431, FR-P 1 371 139, US-P 3 711 577, US-P 4 054 544 beschreiben acyclische Triphosphonatamine, die zum Teil halogeniert sind.

In EP-A 0 640 655 werden Formmassen aus aromatischem Polycarbonat, styrolhaltigen Copolymerisaten und Pfropfpolymerisaten beschrieben, die mit monomeren und/oder oligomeren Phosphorverbindungen flammwidrig ausgerüstet werden können.

In EP-A 0 363 608 werden flammwidrige Polymermischungen aus aromatischem Polycarbonat, styrolhaltigem Copolymer oder Pfropfcopolymer sowie oligomeren Phosphaten als Flammschutzadditive beschrieben. Für manche Anwendungen, wie beispielsweise Formteile im Innern von Gehäuseteilen, ist die Wärmeformbeständigkeit dieser Mischungen oft nicht ausreichend.

In US-P 5 061 745 werden Polymermischungen aus aromatischem Polycarbonat, ABS-Pfropfpolymerisar und/oder styrolhaltigem Copolymer und Monophosphaten als Flammschutzadditive beschrieben. Zur Herstellung dünnwandiger Gehäuseteile ist das Niveau der Spannungsrißbeständigkeit dieser Mischungen oft nicht ausreichend.

Aufgabe der vorliegenden Erfindung ist es daher, flammwidrige PC/ABS-Formmassen herzustellen, die sich durch eine Kombination von guter Schlagzähigkeit, Bindenahtfestigkeit und Spannungsrißbeständigkeit bei hoher Wärmeformbeständigkeit auszeichnen. Dieses Eigenschaftsspektrum wird besonders bei Anwendungen im Bereich Datentechnik wie beispielsweise für dünnwandige Gehäuse von Monitoren, Druckern u.a. gefordert.

Es wurde nun überraschenderweise gefunden, daß durch den Einsatz der erfindungsgemäßen Phosphonatamine und mittels Redox-Initiatorsystemen hergestellte Pfropfpolymerisate flammwidrige Polycarbonat-Blends erhalten werden, die Formkörper mit einer Kombination aus guter Schlagzähigzeit, Bindenahtfestigkeit und Spannungsrißbeständigkeit bei hoher Wärmeformbeständigkeit ergeben.

Gegenstand der Erfindung sind daher Blends enthaltend
A) 40 bis 99, vorzugsweise 60 bis 98,5 Gew.-Teile aromatisches Polycarbonat und/oder Polyestercarbonat
B) 0,5 bis 60, vorzugsweise 1 bis 40, insbesondere 2 bis 25 Gew.-Teile Pfropfpolymerisat, dadurch gekennzeichnet, daß die Pfropfpolymerisate B aus
   B.1) 5 bis 95, vorzugsweise 30 bis 80 Gew.-% eines oder mehrerer Vinylmonomeren und
   B.2) 95 bis 5, vorzugsweise 20 bis 70 Gew.% eines oder mehrerer teilchenförmigen Dienkautschuke mit einer Glasumwandlungstemperatur <10°C, vorzugsweise <0°C, besonders bevorzugt < -20°C, die durch Emulsionspolymerisation hergestellt sind, wobei zur Pfropfpolymerisation ein Initiatorsystem aus einem organischen Hydroperoxid und Ascorbinsäure verwendet wird,
C) 0 bis 45, vorzugsweise 0 bis 30, besonders bevorzugt 2 bis 25 Gew.-Teile mindestens eines thermoplatischen Polymers ausgewählt aus der Gruppe der thermoplastischen Vinyl(co)polymerisate und Polyalkylenterephthalate,
D) 0,1 bis 30 Gew.-Teile, vorzugsweise 1 bis 25 Gew.-Teile, besonders bevorzugt 2 bis 20 Gew.-Teile Phosphonatamin der Formel (I)

   A_{3-y}-N-B_{y} (I),

   in welcher
   A für einen Rest der Formel (IIa) 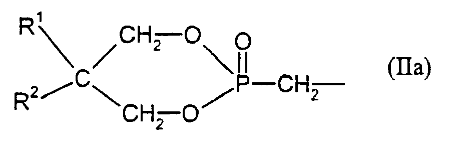 oder (IIb) 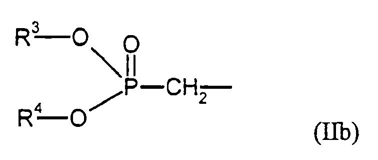 steht,
   - R¹ und R²: unabhängig voneinander für unsubstituiertes oder substituiertes C₁-C₁₀-Akyl oder für unsubstituiertes oder substituiertes C₆-C₁₀-Aryl, stehen,
   - R³ und R⁴: unabhängig voneinander für unsubstituiertes oder substituiertes C₁-C₁₀-Alkyl oder unsubstituiertes oder substituiertes C₆-C₁₀-Aryl stehen oder
   - R³ und R⁴: zusammen für unsubstituiertes oder substituiertes C₃-C₁₀-Alkylen stehen,
   - y: die Zahlenwerte 0, 1 oder 2 bedeuten und
   - B: unabhängig für Wasserstoff, gegebenenfalls halogeniertes C₂-C₈-Alkyl, unsubstituiertes oder substituiertes C₆-C₁₀-Aryl steht,
E) 0 bis 5 Gew.-Teile, vorzugsweise 0,1 bis 3 Gew.-Teile, besonders bevorzugt 0,1 bis 1, ganz besonders bevorzugt 0,1 bis 0,5 Gew.-Teile fluoriertes Polyolefin.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-OS 2 232 877, DE-OS 2 703 376, DE-OS 2 714 544, DE-OS 3 000 610, DE-OS 3 832 396; zur Herstellung aromatischer Polyestercarbonate z. B. DE-OS 3 077 934).

Die Herstellung aromatischer Polycarbonate erfolgt z.B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielseise Monophenolen und gegebenenfalls unter Verwendung von trifunktionellen oder mehr als trifunktionellen Verzweigern, beispielsweise Triphenolen oder Tetraphenolen.

Diphenole zur Herstellung der aromatischen Polycarbonate und/oder aromatischen Polyestercarbonate sind vorzugsweise solche der Formel (II) 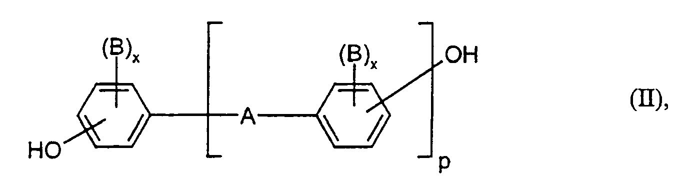 wobei
- A: eine Einfachbindung, C₁-C₅-Alkylen, C₂-C₅-Alkyliden, C₅-C₆-Cycloalkyliden, -O-, -SO-, -CO-, -S-, -SO₂-, C₆-C₁₂-Arylen, an das weitere aromatische gegebenenfalls Heteroatome enthaltende Ringe kondensiert sein können,
oder ein Rest der Formel (III) oder (IV) 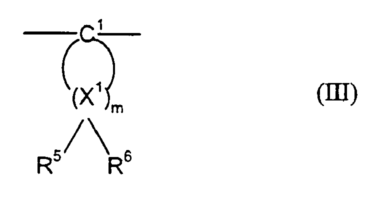 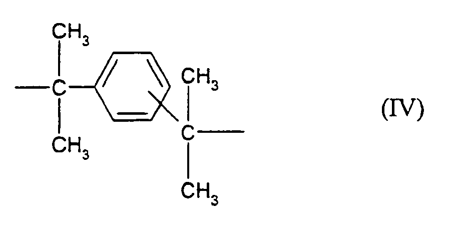
- B: jeweils C₁-C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁-C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, daß an mindestens einen Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kembromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenyl-sulfon sowie deren di- und tetrabromierten oder chlorierten Derviate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Insbesondere bevorzugt ist 2,2-Bis-(4-hydroxyphenyl)-propan (Bisphenol-A).

Es können die Diphenole einzeln oder als beliebige Mischungen eingesetzt werden.

Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-%, und 10 Mol-%, bezogen auf die Molsumme der jeweils eingesetzten Diphenole.

Die thermoplastischen, aromatischen Polycarbonate haben mittlere Gewichtsmittelmolekulargewichte (M_{w}, gemessen z. B. durch Ultrazentrifuge oder Streulichtmessung) von 10 000 bis 200 000, vorzugsweise 20 000 bis 80 000.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.-%, vorzugsweise 2,5 bis 25 Gew.% (bezogen auf die Gesamtmenge an einzusetzenden Diphenolen) Polydiorganosiloxane mit Hydroxy-aryloxy-Endgruppen eingesetzt werden. Diese sind bekannt (s. beispielsweise US-Patent 3 419 634) bzw. nach literaturbekannten Verfahren herstellbar. Die Herstellung Polydiorganosiloxanhaltiger Copolycarbonate wird z. B. in DE-OS 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als bevorzugt bzw. besonders bevorzugt genannten Diphenole, insbesondere 2,2-Bis(3,5-dibrom-4-hydroxyphenyl)-propan.

Aromatische Dicarbonsäuredihalogenide zur Herstellung von aromatischen Polyestercarbonate sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen als bifunktionelles Säurederivat mitverwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁-C₂₂-Alkylgruppen oder durch Halogenatome substituiert sein können, sowie aliphatische C₂-C₂₂-Monocarbonsäurechloride in Betracht.

Die Menge an Kettenabbrechern beträgt jeweils 0,1 bis 10 Mol-%, bezogen im Falle der phenolischen Kettenabbrecher auf Mole Diphenole und Falle von Monocarbonsäurechlorid-Kettenabbrecher auf Mole Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu ebenfalls DE-OS 2 940 024 und DE-OS 3 007 934).

Als Verzweigungsmittel können beispielsweise 3- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbonsäuretetrachlorid oder Pyromellithsäuretetrachlorid, in Mengen von 0,01 bis 1,0 Mol-% (bezogen auf eingesetzte Dicarbonsäuredichloride) oder 3- oder mehrfunktionelle Phenole, wie Phloroglucin, 4,6-Dimethyl-2,4,6-tri-(4-hydroxyphenyl)-hepten-2,4,4-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methylphenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate liegt im Bereich 1,18 bis 1,4, vorzugsweise 1,22 bis 1,3 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch untereinander eingesetzt werden.

### Komponente B

Die Komponente B umfaßt ein oder mehrere Pfropfpolymerisate von
- B.1: 5 bis 95, vorzugsweise 30 bis 80 Gew.-%, wenigstens eines Vinylmonomeren auf
- B.2: 95 bis 5, vorzugsweise 70 bis 20 Gew.-% einer oder mehrerer teilchenförmiger Dienkautschuke mit Glasübergangstemperaturen <10°C, vorzugsweise <0°C, besonders bevorzugt <-10°C,
die durch Emulsionspolymerisation mittels eines Initiatorsystems aus organischem Hydroperoxid und Ascorbinsäure hergestellt werden.
Die Pfropfgrundlage B.2 hat im allgemeinen eine mittlere Teilchengröße (d₅₀-Wert) von 0,05 bis 5 µm, vorzugsweise 0,10 bis 0,6 µm, besonders bevorzugt
0,20 bis 0,40 µm.

Monomere B. 1 sind vorzugsweise Gemische aus
- B.1.1: 50 bis 99 Gew.-Teilen Vinylaromaten und/oder kernsubstituierten Vinylaromaten (wie beispielsweise Styrol, α-Methylstyrol, p-Methylstyrol, p-Chlorstyrol) und/oder Methacrylsäure-(C₁-C₈)-Alkylester (wie z.B. Methylmethacrylat, Ethylmethacrylat) und
- B.1.2: 1 bis 50 Gew.-Teilen Vinylcyanide (ungesättigte Nitrile wie Acrylnitril und Methacrylnitril) und/oder (Meth)Acrylsäure-(C₁-C₈)-Alkylester (wie z.B. Methylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere B.1.1 sind ausgewählt aus mindestens einem der Monomere Styrol, α-Methylstyrol und Methylmethacrylat, bevorzugte Monomere B.1.2 sind ausgewählt aus mindestens einem der Monomere Acrylnitril, Maleinsäureanhydrid und Methylmethacrylat.

Besonders bevorzugte Monomere sind B.1.1 Styrol und B.1.2 Acrylnitril.

Bevorzugte Pfropfgrundlagen B.2 sind Dienkautschuke (z. B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß B.1.1 und B.1.2), mit der Maßgabe, daß die Glasübergangstemperatur der Komponente B.2 unterhalb <10°C, vorzugsweise <0°C, besonders bevorzugt <-10°C, insbesondere <-20°C liegt.

Besonders bevorzugt ist reiner Polybutadienkautschuk.

Besonders bevorzugt sind Pfropfpolymerisate aus
a) 40 bis 90 Gew.-% teilchenförmigen Dienkautschuks eines mittleren Teilchendurchmessers von 0,1 bis 0,6 µm und
b) 60 bis 10 Gew.-% Styrol, Acrylnitril, Methylmethacrylat oder Mischungen daraus durch Emulsions-Pfropfpolymerisation,
die dadurch gekennzeichnet ist, daß man zur Pfropfpolymerisation ein Initiatorsystem aus einem organischen Hydroperoxid und Ascorbinsäure unter Erzielung einer Pfropfausbeute von >60 Gew.-%, vorzugsweise >75 Gew.-%, insbesondere >85 Gew.-% (bezogen auf eingesetzte Monomere B.1 bzw. b) verwendet.

Gemäß einer bevorzugten Ausführungsform führt man die Pfropfpolymerisation der Monomeren a) in wäßriger Emulsion in Gegenwart einer Emulsion des Kautschukpolymerisates b) bei Temperaturen von 40 bis 70°C, insbesondere 50 bis 70°C, durch, unter Einsatz eines Initiatorsystems aus organischem Hydroperoxid (I) und Ascorbinsäure (II), wobei im allgemeinen 0,3 bis 1,5 Gew.-Teile (I) und 0,1 bis 1 Gewichtsteil (II), jeweils bezogen auf 100 Gew.-Teile Pfropfmonomere, eingesetzt werden und das Gewichtsverhältnis (I):(II) 0,3 bis 15, insbesondere 1 bis 10, vorzugsweise 3 bis 8, ist (vgl. DE-A-37 08 913 (= US-A-4.859.744) und EP-A-315 868 (= US-A-4.937.285)).

Die Kautschuke sind im allgemeinen partiell vernetzt und besitzen Gelgehalte von 10 bis 90 Gew.-%, insbesondere von 40 bis 80 Gew.-%, und sind teilchenförmig mit mittleren Teilchengrößen (d₅₀-Werte) von 0,1 bis 0,6 µm, insbesondere 0,2 bis 0,4 µm. Solche teilchenförmigen Kautschuke sind bekannt. Sie werden durch Emulsionspolymerisation hergestellt und liegen meist als Latices vor.

Die Pfropfpolymerisate werden in wäßriger Emulsion durch Polymerisation der Monomeren auf einen in wäßriger Emulsion vorliegenden Kautschuk hergestellt werden. Dabei werden üblicherweise oberflächenaktive Hilfsmittel eingesetzt, Emulgatoren oder Dispergatoren sowie gegebenenfalls Zusätze, um bestimmte pH-Werte und Elektrolytgehalte bei der Pfropfpolymerisation einzustellen. Unter Umständen kann man die Emulsions-Pfropfpolymerisation auch ohne Emulgatorzusatz durchführen, insbesondere dann, wenn man mit geringen Monomermengen arbeitet, bezogen auf die Kautschukmenge, oder wenn die in der Kautschukemulsion (Latex) schon selbst vorliegenden Mengen an Emulgator bereits ausreichen, um die Pfropfpolymerisation der Monomeren im Emulsionszustand bei genügender Emulsionsstabilität zu gewährleisten.

Besonders geeignet sind anionische Emulgatoren, vorzugsweise Alkali-Salze von Fettsäuren, Harzsäuren, disproportionierten Harzsäuren, Alkylsulfonsäuren, Arylsulfonsäuren. Sie werden in Mengen bis zu 5 Gew.-%, vorzugsweise bis zu 2,5 Gew.-%, bezogen auf die zu polymerisierenden Monomeren, eingesetzt.

Geeignete Hydroperoxide sind beispielsweise Cumolhydroperoxid, tert.-Butylhydroperoxid, Waserstoffperoxid, vorzugsweise Cumolhydroperoxid und tert.-Butylhydroperoxid, also Hydroperoxide mit großen Halbwertszeiten.

Eine wäßrige Emulsion eines partiell vernetzten Dienkautschuks wird diskontinuierlich oder kontinuierlich in wäßriger Emulsion bepfropft; bei Polymerisationstemperaturen von 40 bis 70°C, insbesondere 50 bis 70°C, wird die Kautschukemulsion mit den Pfropfmonomeren sowie gegebenenfalls zusätzlichem Emulgator und Hydroperoxid sowie Ascorbinsäurelösungen versetzt. Dabei sind die Mengenverhältnisse, wie oben beschrieben, einzuhalten. In Ausnahmefällen können in die Polymerisation als weitere Komponente des Startersystems katalytisch geringe Mengen Schwermetallkationen, insbesondere Fe, zugefügt werden, insbesondere dann, wenn Dienkautschukemulsionen verwendet werden müssen, die selbst schon größere Mengen Komplexierungsagenzien enthalten. Normalerweise wird in dem Verfahren ohne Zusatz von Eisenionen gearbeitet; diese Methode ist bevorzugt und erlaubt technisch vorteilhaft die Gewinnung praktisch schwermetallfreier- bzw. -armer Pfropfpolymerisate, da sich bekanntermaßen derartige Metallspuren nachteilig auf anwendungstechnische Eigenschaften von Kunststoffen auswirken können. Das Verfahren arbeitet mit wäßrigen Lösungen von Ascorbinsäure und wäßrigen Lösungen von Hydroperoxid; vorteilhaft ist es, nicht genügend wasserlösliche Hydroperoxide, wie Cumolhydroxid, in Form einer wäßrigen Emulsion in das Polymerisationssystem einzuspeisen. In solchen Emulsionen wird vorteilhaft der gleiche Emulgator eingesetzt wie in der Pfropfpolymerisation.

Das Hydroperoxid und die Ascorbinsäure können portionsweise oder kontinuierlich in die Pfropfpolymerisation eindosiert werden. In einer bevorzugten Variante wird das Hydroperoxid anteilmäßig mit dem zu bepfropfenden Kautschuk in den Reaktoren vorgelegt; die Pfropfmonomeren sowie die restliche Ascorbinsäure, Hydroperoxid und gegebenenfalls Emulgator werden mit fortschreitender Polymerisation der Pfropfmonomeren separat in den Reaktor eingespeist.

Die Mengen Hydroperoxid und Ascorbinsäure sind kritisch. Bei Überdosierung von Hydroperoxid und/oder Ascorbinsäure wird die Pfropfpolymerisation beeinträchtigt. Die Pfropfausbeute geht zurück; das Molekulargewicht des gepfropften und des freien Harzes wird geringer; Unter- oder Überschreitung der Mengen an Hydroperoxid und Ascorbinsäure kann sich außerdem empfindlich auf Monomerumsatz und Emulsionsstabilität auswirken, so daß die technische Realisierung der Pfropfpolymerisation unmöglich wird. Um die Durchführung des Verfahrens, die Struktur der Pfropfpolymerisate und deren physikalische Eigenschaften zu optimieren, sind bei der Pfropfpolymerisation eine Temperatur von 40 bis 70°C und die oben angegebenen Hydroperoxid/Ascorbinsäuremengen unbedingt einzuhalten.

Bei der Pfropfpolymerisation bis zu Monomerumsätzen von größer 90 Gew.-%, insbesondere größer 98 Gew.-%, fallen lagerstabile Pfropfpolymeremulsionen mit Polymerisatgehalten von 25 bis 50 Gew.-% an; das Pfropfpolymerisat selbst läßt sich gut aus den Emulsionen durch gekannte Koagulations-Verfahren (z.B. mittels Säuren oder Salzen) isolieren. Will man die Pfropfpolymerisate mit thermoplastischen Harzen kombinieren, die selbst als Emulsion vorliegen, so kann man die Pfropfpolymerisatemulsion mit der Harzemulsion mischen und gemeinsam koagulieren.

Der Gelgehalt der Pfropfgrundlage B.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

### Komponente C

Die Komponente C umfaßt ein oder mehrere thermoplastische Vinyl (co)polymerisate C.1 und/oder Polyalkylenterephthalate C.2.

Geeignet sind als (Co)Polymerisate C.1 Polymerisate von mindestens einem Monomeren aus der Gruppe der Vinylaromaten, Vinylcyanide (ungesättigte Nitrile), (Meth)Acrylsäure-(C₁-C₈)-Alkylester, ungesättigte Carbonsäuren sowie Derivate (wie Anhydride und Imide) ungesättigter Carbonsäuren. Insbesondere geeignet sind (Co)Polymerisate aus
- C.1.1: 50 bis 99, vorzugsweise 60 bis 80 Gew.-Teilen Vinylaromaten und/oder kernsubstituierten Vinylaromaten wie beispielsweise Styrol, α-Methylstyrol, p-Methylstyrol, p-Chlorstyrol) und/oder Methacrylsäure-(C₁-C₄)-Alkylester wie z.B. Methylmethacrylat, Ethylmethacrylat), und
- C.1.2: 1 bis 50, vorzugsweise 20 bis 40 Gew.-Teilen Vinylcyanide (ungesättigte Nitrile) wie Acrylnitril und Methacrylnitril und/oder (Meth)Acrylsäure-(C₁-C₈)-Alkylester (wie z.B. Methylmethacrylat, n-Butylacrylat, t-Butylacrylat) und/oder ungesättigte Carbonsäuren (wie Maleinsäure) und/oder Derivate
(wie Anhydride und Imide) ungesättigter Carbonsäuren (beispielsweise Maleinsäureanhydrid und N-Phenyl-Maleinimid).

Die (Co)Polymerisate C.1 sind harzartig, thermoplastisch und kautschukfrei.

Besonders bevorzugt ist das Copolymerisat aus C.1.1 Styrol und C.1.2 Acrylnitril.

Die (Co)Polymerisate gemäß C.1 sind bekannt und lassen sich durch radikalische Polymerisation, insbesondere durch Emulsions-, Suspensions-, Lösungs- oder Massepolymerisation herstellen. Die (Co)Polymerisate gemäß Komponente C.1 besitzen vorzugsweise Molekulargewichte M_{w} (Gewichtsmittel, ermittelt durch Lichtstreuung oder Sedimentation) zwischen 15 000 und 200 000.

Die Polyalkylenterephthalate der Komponente C.2 sind Reaktionsprodukte aus aromatischen Dicarbonsäuren oder ihren reaktionsfähigen Derivaten, wie Dimethylestem oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Mol-%, bezogen auf die Diolkomponente Ethylenglykol- und/oder Butandiol-1,4-Reste.

Die bevorzugten Polyalkylenterephthalate können neben Terephthalsäureresten bis zu 20 Mol-%, vorzugsweise bis zu 10 Mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexan-diessigsäure.

Die bevorzugten Polyalkylenterephthalate können neben Ethylenglykol- bzw. Butandiol-1 ,4-Resten bis zu 20 Mol-%, vorzugsweise bis zu 10 Mol-%, andere aliphatische Diole mit 3 bis 12 C-Atomen oder cycloalipahtische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-β-hydroxyethoxy-phenyl)-propan und 2,2-Bis-(4-hydroxypropoxyphenyl)-propan (DE-OS 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-OS 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

### Komponente D

Die erfindungsgemäßen Formmassen enthalten als Flammschutzmittel wenigstens eine Phosphonataminverbindung der Formel (I)

A_{3-y}-N-B_{y} (I),

in welcher
- A: für 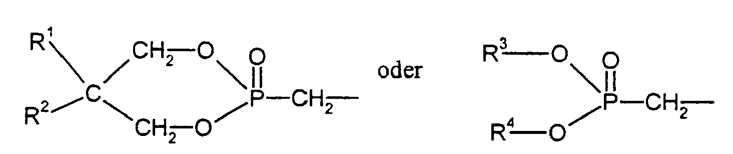 steht,
wobei
- R¹, R², R³ und R⁴: sowie B und y die oben angegebene Bedeutung haben.
- B: steht vorzugsweise unabhängig für Wasserstoff, für Ethyl, n- oder iso-Propyl, welche durch Halogen substituiert sein können, unsubstituiertes oder durch C₁-C₄-Alkyl und/oder Halogen substituiertes C₆-C₁₀-Aryl, insbesondere Phenyl oder Naphthyl.

Alkyl in R¹, R², R³ und R⁴ steht unabhängig vorzugsweise für Methyl, Ethyl, n-Propyl, iso-Propyl, n-, iso-, sec. oder tert. Butyl, Pentyl oder Hexyl.

Substituiertes Alkyl in R¹, R², R³ und R⁴ steht unabhängig vorzugsweise für durch Halogen substituiertes C₁-C₁₀-Alkyl, insbesondere für ein- oder zweifach substituiertes Methyl, Ethyl, n-Propyl, iso-Propyl, n-, iso-, sec. oder tert.-Butyl, Pentyl oder Hexyl.

R³ und R⁴ bilden zusammen mit dem Kohlenstoff, an das sie gebunden sind, vorzugsweise Cyclopentyl, Cyclohexyl, Cycloheptyl oder Cyclooctyl, insbesondere Cyclopentyl oder Cyclohexyl.

C₆-C₁₀-Aryl steht in R¹, R², R³ und R⁴ unabhängig vorzugsweise für Phenyl, Naphthyl oder Binaphthyl, insbesondere o-Phenyl, o-Naphthyl, o-Binaphthyl, welche durch Halogen (im allgemeinen ein-, zwei- oder dreifach) substituiert sein können.

Beispielhaft und vorzugsweise werden genannt: 5,5,5',5',5",5"-Hexamethyl-tris(1,3,2-dioxaphosphorinan-methan)amino-2,2',2"-trioxid der Formel (I-1) 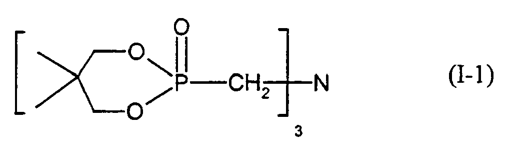 (Versuchsprodukt XPM 1000 Fa. Solutia Inc., St. Louis, USA)
1,3,2-Dioxaphosphorinan-2-methanamin, N-butyl-N[(5,5-dimethyl-1,3,2-dioxaphosphorinan-2-yl)methyl]-5,5-dimethyl-, P,2-dioxide; 1,3,2-Dioxaphosphorinane-2-methanamin, N-[[5,,5-dimethyl-1,3,2-dioxaphosphorinan-2-yl)methyl]-5,5-dimethyl-N-phenyl-, P,2-dioxid; 1,3,2-Dioxaphosphorinan-2-methanamin, N,N-dibutyl-5,5-dimethyl-, 2-oxid, 1,3,2-Dioxaphosphorinan-2-methanimin, N-[(5,5-dimethyl-1,3,2-dioxaphosphorinan-2-yl)methyl]-N-ethyl-5,5-dimethyl-, P,2-dioxid, 1,3,2-Dioxaphosphorinan-2-methanamin, N-butyl-N-[(5,5-dichloromethyl-1,3,2-dioxaphosphorinan-2-yl)-methyl]-5,5-di-chloromethyl-, P,2-dioxid, 1,3,2-Dioxaphosphorinan-2-methanamin, N-[(5,5-di-chloromethyl-1,3,2-dioxoaphosphorinan-2-yl)methyl]-5,5-dichloromethyl-N-phenyl-, P,2-dioxid; 1,3,2-Dioxaphosphorinan-2-methanamin, N,N-di-(4-chlorobutyl)-5,5-dimethyl-2-oxide; 1,3,2-Dioxaphosphorinan-2-methanimin, N-[(5,5-dimethyl-1,3,2-dioxaphosphorinan-2-yl)methan]-N-(2-chloroethyl)-5,5-di(chloromethyl)-, P2-dioxid.

### Bevorzugt sind weiterhin:

### Verbindungen der Formel (I-2) oder I-3)

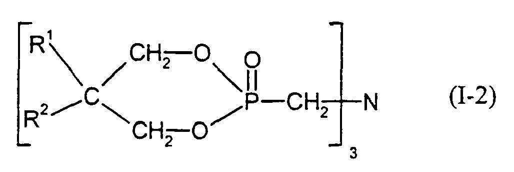

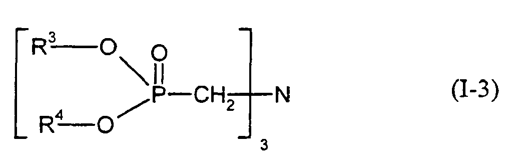

wobei

R¹, R², R³ und R⁴ die oben angegebenen Bedeutungen haben.

Besonders bevorzugt sind Verbindungen der Formel (I-2), (I-1). Besonders bevorzugt sind auch die oben genannten Einzelverbindungen.

Die Verbindungen der Formel (I) können nach folgenden Verfahren hergestellt werden:
a) PCl₃ wird zu einer Mischung von 1,3-Diol-Derivaten, Wasser und einem organischen Lösungsmittel bei einer Temperatur von 10-60°C zugegeben. Man erhält dabei ein 5,5-disubstituiertes 1,3,2-Dioxaphosphorinan-2-oxid der Formel (Ia) 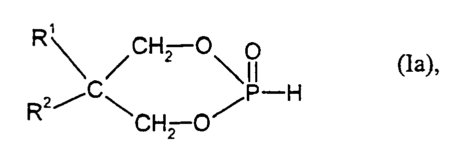 wobei R₁ und R₂ die oben genannte Bedeutung haben,
b) nach Reinigung wird das 1,3,2-Dioxaphosphorinan-2-oxid in Paraformaldehyd mit einem Amin B_{y}NH_{3-y}, wobei B und y die oben genannte Bedeutung haben, zur Reaktion gebracht,
c) nach erneuter Reinigung und Trocknung wird das Phosphonatamin der Formel (I) erhalten.

Eine detailierte Beschreibung des Herstellungsverfahren kann aus US-Patentschrift 5 844 028 entnommen werden.

### Komponente E

Die fluorierten Polyolefine E sind hochmolekular und besitzen Glasübergangstemperaturen von über -30°C, in der Regel von über 100°C, Fluorgehalte, vorzugsweise von 65 bis 76, insbesondere von 70 bis 76 Gew.-%, mittlere Teilchendurchmesser d₅₀ von 0,05 bis 1 000, vorzugsweise 0,08 bis 20 µm. Im allgemeinen haben die fluorierten Polyolefine E eine Dichte von 1,2 bis 2,3 g/cm³. Bevorzugte fluorierte Polyolefine E sind Polytetrafluorethylen, Polyvinylidenfluorid, Tetrafluorethylen-(Hexafluorpropylen- und Ethylen/Tetrafluorethylen-Copolymerisate. Die fluorierten Polyolefine sind bekannt (vgl. "Vinyl and Related Polymers" von Schildknecht, John Wiley & Sons, Inc., New York, 1962, Seite 484-494; "Fluorpolymers" von Wall, Wiley-Interscience, John Wiley & Sons, Inc., New York, Band 13, 1970, Seite 623-654; "Modern Plastics Encyclopedia", 1970-1971, Band 47, Nr. 10 A, Oktober 1970, Mc Graw-Hill, Inc., New York, Seite 134 und 774; "Modern Plastica Encyclopedia", 1975-1976, Oktober 1975, Band 52, Nr. 10 A, Mc Graw-Hill, Inc., New York, Seite 27, 28 und 472 und US-PS 3 671 487, 3 723 373 und 3 838 092).

Sie können nach bekannten Verfahren hergestellt werden, so beispielsweise durch Polymerisation von Tetrafluorethylen in wäßrigem Medium mit einem freie Radikale bildenden Katalysator, beispielseise Natrium-, Kalium- oder Ammoniumperoxidisulfat bei Drucken von 7 bis 71 kg/cm² und bei Temperaturen von 0 bis 200°C, vorzugsweise bei Temperaturen von 20 bis 100°C. (Nähere Einzelheiten s. z.B. US-Patent 2 393 967). Je nach Einsatzform kann die Dichte dieser Materialien zwischen 1,2 und 2,3 g/cm³, die mittlere Teilchengröße zwischen 0,5 und 1 000 µm liegen.

Erfindungsgemäß bevorzugte fluorierte Polyolefine E sind Tetrafluorethylenpolymerisate mit mittleren Teilchendurchmesser von 0,05 bis 20 µm, vorzugsweise 0,08 bis 10 µm, und eine Dichte von 1,2 bis 1,9 g/cm³ und werden vorzugsweise in Form einer koagulierten Mischung von Emulsionen der Tetrafluorethylenpolymerisate E mit Emulsionen der Pfropfpolymerisate B eingesetzt.

Weitere erfindungsgemäß bevorzugte Zubereitungen sind die fluorierten Polyolefine E:
- E.1): als koagulierte Mischung mit mindestens einer der Komponenten A bis C, wobei das fluorierte Polyolefin E bzw. Polyolefingemisch als Emulsion mit mindestens einer Emulsion der Komponenten A bis C gemischt und anschließend koaguliert wird,
oder
- E.2): als Präcompound mit mindestens einer der Komponenten A bis C, wobei die fluorierten Polyolefine E als Pulver mit einem Pulver oder einem Granulat mindestens einer der Komponenten A bis C vermischt und in der Schmelze, im allgemeinen bei Temperaturen von 208°C bis 330°C in den üblichen Aggregaten wie Innenkneter, Extruder oder Doppelwellenschnecken, compoundiert wird.

Bevorzugte Zubereitungen für die fluorierten Polyolefine E sind koagulierte Mischungen mit einem Pfropfpolymerisat B oder einem Vinyl(co)polymerisat C.

Geeignete, in Pulverform einsetzbare fluorierte Polyolefine E sind Tetrafluorethylenpolymerisate mit mittleren Teilchendurchmesser von 100 bis 1 000 µm und Dichten von 2,0 g/cm³ bis 2,3 g/cm³.

Zur Herstellung einer koagulierten Mischung aus B und E wird zuerst eine wäßrige Emulsion (Latex) eines Pfropfpolymerisates B mit einer feinteiligen Emulsion eines Tetrafluorethylenpolymerisates E vermischt; geeignete Tetrafluorethylenpolymerisat-Emulsionen besitzen üblicherweise Feststoffgehalte von 30 bis 70 Gew-.%, insbesondere von 50 bis 60 Gew.-%, vorzugsweise von 30 bis 35 Gew.-%.

In der Emulsionsmischung liegt das Gleichgewichtsverhältnis Pfropfpolymerisat B bzw. (Co)polymerisate zum fluorierten Polyolefin E bie 95:5 bis 60:40, vorzugweise 90:10 bis 50:50. Anschließend wird die Emulsionsmischung in bekannter Weise koaguliert, beispielsweise durch Sprühtrocknen, Gefriertrocknung oder Koagulation mittels Zusatz von anorganischen oder organischen Salzen, Säuren, Basen oder organischen, mit Wasser mischbaren Lösemitteln, wie alkoholen, ketonen, vorzugsweise bei Temperaturen von 20 bis 150°C, insbesondere von 50 bis 100°C. Falls erforderlich, kann bei 50 bis 200°C, bevorzugt 70 bis 100°C, getrocknet werden.

Geeignete Tetrafluorethylenpolymerisat-Emulsionen sind handelsübliche Produkte und werden beispielsweise von der Firma DuPont als Teflon^{®} 30 N angeboten.

Die erfindungsgemäßen Formmassen können wenigstens eines der üblichen Additive, wie Gleit- und Entformungsmittel, Nukleiermittel, Antistatika, Stabilisatoren sowie Farbstoffe und Pigmente enthalten.

Die erfindungsgemäßen Formmassen können bis zu 35 Gew.-%, bezogen auf die Gesamt-Formmasse, eines weiteren, gegebenenfalls synergistisch wirkenden Flammschutzmittels enthalten. Beispielhaft werden als weitere Flammschutzmittel organische Halogenverbindugen wie Decabrombisphenylether, Tetrabrombisphenol, anorganische Halogenverbindungen wie Ammoniumbromid, Stickstoffverbindungen, wie Melamin, Melaminformaldehyd-Harze, anorganische Hydroxidverbindungen wie Mg-, Al-Hydroxid, anorganische Verbindungen wie Antimonoxide, Bariummetaborat, Hydroxoantimonat, Zirkonoxid, Zirkonhydroxid, Molybdenoxid, Ammoniummolybdat, Zinkborat, Ammoniumborat, Talk, Silikone, Siliziumdioxid und Zinnoxid sowie Siloxanverbindungen genannt.

Weiterhin sind als Flammschutzmittel Phosphorverbindungen der Formel (VI) geeignet, 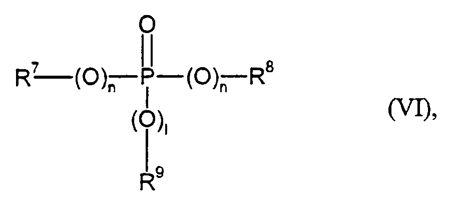 in der
- R⁷, R⁸ und R⁹: unabhängig voneinander ein gegebenenfalls halogeniertes C₁-C₈-Alkyl oder ein gegebenenfalls halogeniertes und/oder alkyliertes C₅- oder C₆-Cycloalkyl oder ein gegebenenfalls halogeniertes und/oder alkyliertes und/ oder aralkyliertes C₆-C₃₀-Aryl, und
- "n" und "1": unabhängig voneinander 0 oder 1 sind.

Diese Phosphorverbindungen sind generell bekannt (siehe beispielsweise Ullmann, Enzyklopädie der technischen Chemie, Band 18, Seiten 301 ff, 1979 und EP-A 345 522). Die aralkylierten Phosphorverbindungen sind beispielsweise in der DE-OS 38 24 356 beschrieben.

Gegebenenfalls halogenierte C₁-C₈-Alkylreste gemäß (VI) können einfach oder mehrfach halogeniert, linear oder verzweigt sein. Beispiele für Alkylreste sind Chlorethyl. 2-Chlorpropyl, 2,3-Dibrompropyl, Butyl, Methyl oder Octyl.

Gegebenenfalls halogenierte und/oder alkylierte C₅-oder C₆-Cycloalkyle gemäß (VI) sind gegebenenfalls einfach bis mehrfach halogenierte und/oder alkylierte C₅- oder C₆-Cycloslkyle, also z.B. Cyclopentyl, Cyclohexyl, 3,3,5-Trimethylcyclohexyl und vollchloriertes Cyclohexyl.

Gegebenenfalls halogenierte und/oder alkylierte und/oder aralkylierte C₆-C₃₀-Arylreste gemäß (VI) sind gegebenenfalls ein oder mehrkernig, einfach oder mehrfach halogeniert und/oder alkyliert und/oder aralkyliert, z.B. Chlorphenyl, Bromphenyl, Pentachlorphenyl, Pentabromphenyl, Phenyl, Kresyl, Isopropylphenyl, benzylsubstituiertes Phenyl und Naphthyl.

Bevorzugt stehen R⁷, R⁸ und R⁹ unabhängig voneinander für Methyl, Ethyl, Butyl, Octyl, Phenyl, Kresyl, Cumyl oder Naphthyl. Besonders bevorzugt stehen R⁷, R⁸ und R⁹ unabhängig voneinander für Methyl, Ethyl, Butyl, gegebenenfalls durch Methyl und/oder Ethyl substituiertes Phenyl.

Erfindungsgemäß einsetzbare Phosphorverbindungen gemäß Formel (VI) sind z.B. Tributylphosphat, Tris-(2-chlorethyl)phosphat, Tris-(2,3-dibrompropyl)phosphat, Triphenylphosphat, Trikresylphosphat, Diphenylkresylphosphat, Diphenyloctylphosphat, Diphenyl-2-ethylkresylphosphat, Tri-(isopropylphenyl)phosphat, Tris-(p-benzylphenyl)phosphat, Triphenylphosphinoxid, Methanphosphonsäuredimethylester, Methanphosphonsäuredipentylester und Phenylphosphonsäurediethylester.

Geeignete Flammschutzmittel sind auch dimere und oligomere Phosphate, wie beispielsweise in der EP-A-0 363 608 beschrieben.

Die erfindungsgemäßen Formmassen können als Flammschutzmittel Phosphorverbindungen gemäß Formel (VII) enthalten,

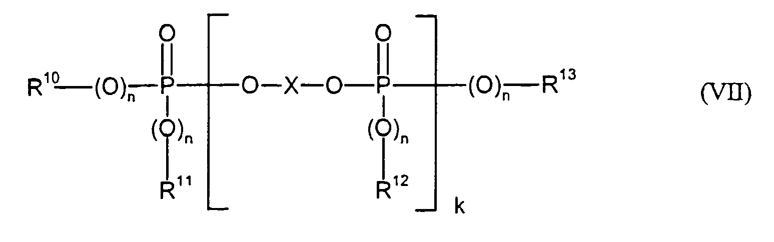

In der Formel stehen R¹⁰, R¹¹, R¹² und R¹³, unabhängig voneinander für jeweils gegebenenfalls halogeniertes C₁-C₈-Alkyl, C₅-C₆-Cycloalkyl, C₆-C₂₀-Aryl oder C₇-C₁₂-Aralkyl.

Bevorzugt stehen R¹⁰, R¹¹, R¹¹ und R¹³ unabhängig voneinander für C₁-C₄-Alkyl, Phenyl, Naphthyl oder Phenyl-C₁-C₄-alkyl. Die aromatischen Gruppen R¹⁰, R¹¹, R¹² und R¹³ können ihrerseits mit Halogen- und/oder Alkylgruppen, vorzugsweise Chlor, Brom und/oder C₁-C₄-Alkyl substituiert sein. Besonders bevorzugte ArylReste sind Kresyl, Phenyl, Xylenyl, Propylphenyl oder Butylphenyl sowie die entsprechenden bromierten und chlorierten Derivate davon.
- X: in der Formel (VII) bedeutet einen ein- oder mehrkernigen aromatischen Rest mit 6 bis 30 C-Atomen. Dieser leitet sich vorzugsweise von Diphenolen der Formel (II) ab. Besonders bevorzugt sind Diphenylphenol, Bisphenol A, Resorcin oder Hydrochinon oder deren chlorierte oder bromierte Derivaten.
- n: in der Formel (VII) kann, unabhängig voneinander, 0 oder 1 sein, vorzugsweise ist n gleich 1.
- k: steht für Werte von 0 bis 30, vorzugsweise für einen durchschnittlichen Wert von 0,3 bis 20 , besonders bevorzugt 0,5 bis 10, insbesondere 0,5 bis 6.

Einsetzbar sind auch Mischungen aus 10 bis 90 Gew.-%, vorzugsweise 12 bis 40 Gew.-%, wenigstens einer Monophosphorverbindung der Formel (VI) und wenigstens einer oligomeren Phosphorverbindung beziehungsweise eines Gemisches von oligomeren Phosphorverbindungen wie in EP-A-363 608 beschrieben sowie Phosphorverbindungen gemäß Formel (VII) in Mengen von 10 bis 90 Gew.-%, vorzugsweise 60 bis 88 Gew.-%, bezogen auf die Gesamtmenge an Phosphorverbindungen, eingesetzt.

Monophosphorverbindungen der Formel (VI) sind insbesondere Tributylphosphat, Tris-(2-chlorethyl)-phosphat, Tris-(2,3-dibromprobyl)-phosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphonsäurediphenylester, Phenylphosphonsäurediethylester, Triphenylphosphinoxid oder Trikresylphosphinoxid.

Die Mischungen aus monomeren und oligomeren Phosphorverbindungen der Formel (VII) weisen durchschnittliche k-Werte von 0,3 bis 20, bevorzugt 0,5 bis 10, insbesondere von 0,5 bis 6 auf.

Die genannten Phosphorverbindungen sind bekannt (vgl. z.B. EP-A-363 608, EP-A-640 655) oder lassen sich nach bekannten Methoden in analoger Weise herstellen (z.B. Ullmanns Encyklopädie der technischen Chemie, Bd. 18, S. 301 ff. 1979; Houben-Weyl, Methoden der organischen Chemie, Bd. 12/1, S. 43; Beilstein Bd. 6, S. 177).

Die erfindungsgemäßen Formmassen enthaltend die Komponenten A bis E und gegebenenfalls weiteren bekannten Zusätzen wie Stabilisatoren, Farbstoffen, Pigmenten, Gleit- und Entformungsmitteln, Nukleiermittel sowie Antistatika, werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert und schmelzextrudiert, wobei die Komponente E vorzugsweise in Form der bereits erwähnten koagulierten Mischung eingesetzt wird.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die erfindungsgemäßen thermoplastischen Formmassen eignen sich aufgrund ihrer ausgezeichneten Flammfestigkeit und ihren sehr guten mechanischen Eigenschaften zur Herstellung von Formkörpern jeglicher Art, insbesondere solchen mit erhöhten Anforderungen an Bruchbeständigkeit.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind: Gehäuseteile jeder Art, z.B. für Haushaltsgeräte wie Saftpressen, Kaffeemaschinen, Mixer, für Büromaschinen wie Monitore, Drucker, Kopierer, oder Abdeckplatten für den Bausektor und Teile für den Kfz-Sektor. Sie sind außerdem auf dem Gebiet der Elektrotechnik einsetzbar, weil sie sehr gute elektrische Eigenschaften haben.

Weiterhin können die erfindungsgemäßen Formmassen beispielsweise zur Herstellung von folgenden Formkörpern bzw. Formteilen verwendet werden:
Innenausbauteile für Schienenfahrzeuge (FR), Radkappen, Gehäuse von Kleintransformatoren enthaltenden Elektrogeräten, Gehäuse für Geräte zur Informationsverbreitung und -Übermittlung, Gehäuse und Verkleidung für medizinische Zwecke, Massagegeräte und Gehäuse dafür, Spielfahrzeuge für Kinder, flächige Wandelemente, Gehäuse für Sicherheitseinrichtungen, Heckspoiler, wärmeisolierte Transportbehältnisse, Vorrichtung zur Haltung oder Versorgung von Kleintieren, Formteile für Sanitär- und Badeausrüstungen, Abdeckgitter für Lüfteröffnungen, Formteile für Garten- und Gerätehäuser, Gehäuse für Gartengeräte.

Eine weitere Form der Verarbeitung ist die Herstellung von Formkörpern durch Tiefziehen aus vorher hergestellten Platten oder Folien.

Ein weiterer Gegenstand der vorliegenden Erfindung ist daher auch die Verwendung der erfindungsgemäßen Formmassen zur Herstellung von Formkörpern jeglicher Art, vorzugsweise der oben genannten, sowie die Formkörper aus den erfindungsgemäßen Formmassen.

### Beispiele

### Komponente A

Lineares Polycarbonat auf Basis Bisphenol A mit einer relativen Lösungsviskosität von 1,252, gemessen in CH₂Cl₂ als Lösungsmittel bei 25°C und einer Konzentration von 0,5 g/100 ml.

### Komponente B

Pfropfgrundlage:
- B.2: Emulsion eines partiell vernetzten Polybutadiens mit einem mittleren Teilchendurchmesser von 0,28 µm (d₅₀-Wert), einem Gelgehalt von 55 Gew.-%. Die Emulsion enthält 50 Gew.-% Polymerisatfeststoff.

Herstellung der Pfropfpolymerisate:
Ba) Pfropfpolymerisat aus 60 Gew.-% Dienkautschuk (B.2) und 40 Gew.-% SAN-Copolymer gemäß DE-A-37 08 913.
Eine Mischung aus 200 Gew.-Teilen des Latex (B.2) und 149 Gew.-Teilen Wasser werden in einem Reaktor vorgelegt und auf 60 bis 62°C aufgeheizt. Bei dieser Temperatur werden folgende zwei Lösungen bzw. Emulsionen in nachfolgender Reihenfolge in den Reaktor eingegeben:

| | |
|---|---|
| 1. | 0,0836 Gew.-Teile Cumolhydroperoxid |
| | 6,9600 Gew.-Teile Wasser |
| | 0,0600 Gew.-Teile Na-Salz von C₁₄-C₁₆-Alkylsulfonsäuren |
| | |
| 2. | 0,0557 Gew.-Teile Ascorbinsäure |
| | 6,9600 Gew.-Teile Wasser. |

Danach werden nachstehende Zuläufe innerhalb von 4 Stunden bei einer Innentemperatur von 60 bis 62°C in den Reaktor unter Rühren eindosiert:

| | |
|---|---|
| Z1) | 39,05 Gew.-Teile Wasser |
| | 4,00 Gew.-Teile Na-Salz der disproportionierten Abietinsäure |
| | 3,10 Gew.-Teile ln-Natronlauge |
| | 0,62 Gew.-Teile Cumolhydroperoxid |
| | |
| Z2) | 59 Gew.-Teile Styrol |
| | 23 Gew.-Teile Acrynitril |
| | |
| Z3) | 39,800 Gew.-Teile Wasser |
| | 0,105 Gew.-Teile Ascorbinsäure |

Anschließend wird bei 60 bis 62°C 6 Stunden lang auspolymerisiert. Der Monomerumsatz ist größer als 97 Gew.-%.
Nach Stabilisierung mit 1,2 Gew.-Teilen phenolischem Antioxidans, pro 100 Gew.-Teile Pfropfpolymer, wird das Pfropfpolymer durch Koagulation mit einer Essigsäure/Mg-Sulfat-Mischung isoliert, gewaschen und zu einem Pulver getrocknet.
Die SAN-Pfropfung verläuft mit einer Pfropfausbeute von 89 Gew.-%.
Die Pfropfausbeute wurde bestimmt durch fraktionierende Entmischung mit den entmischenden Flüssigkeiten Dimethylformamid/Methylcyclohexan in der Ultrazentrifuge und durch Ermittlung der Mengen und der chemischen Zusammensetzung der so erhaltenen Fraktionen (siehe R. Kuhn, Makromol-Chemie 177, 1525 (1976)).

### Komponente C

Sturol/Acrylnitril-Copolymerisat mit einem Styrol/Acrylnitril-Gewichtsverhältnis von 72:28 und einer Grenzviskosität von 0,55 dl/g (Messung in Dimethylformamid bei 20°C).

### Komponente D

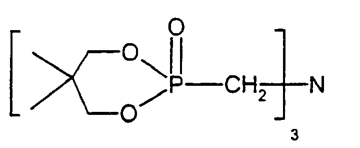

(XPM 1000 Entwicklungsprodukt Fa. Solutia Inc., St. Louis, USA)

### Komponente E

Tetrafluorethylenpolymerisat als koagulierte Mischung aus einer SAN-Pfropfpolymerisat-Emulsion gemäß o.g. Komponente B in Wasser und einer Tetrafluorethylenpolymerisat-Emulsion in Wasser. Das Gewichtsverhältnis Pfropfpolymerisat B zum Tetrafluorethylenpolymerisat E in der Mischung ist 90 Gew.-% zu 10 Gew.-%. Die Tetrafluorethylenpolyermisat-Emulsion besitzt einen Feststoffgehalt von 60 Gew.-%, der mittlere Teilchendurchmesser liegt zwischen 0,05 und 0,5 µm. Die SAN-Pfropfpolymerisat-Emulsion besitzt einen Feststoffgehalt von 34 Gew.-% und einen mittleren Latexteilchendurchmesser von d₅₀ = 0,28 µm.

### Herstellung von E

Die Emulsion des Tetrafluorethylenpolymerisats (Teflon 30 N der Fa. DuPont) wird mit der Emulsion des SAN-Pfropfpolymerisats B vermischt und mit 1,8 Gew.-%, bezogen auf Polymerfeststoff, phenolischer Antioxidantien stabilisiert. Bei 85 bis 95°C wird die Mischung mit einer wäßrigen Lösung von MgSO₄ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100°C zu einem Pulver getrocknet. Dieses Pulver kann dann mit den weiteren Komponenten in den beschriebenen Aggregaten compoundiert werden.

### Herstellung und Prüfung der erfindungsgemäßen Formmassen

Das Mischen der Komponenten erfolgt auf einem 3-1-Innenkneter. Die Formkörper werden auf einer Spritzgießmaschine Typ Arburg 270 E bei 260°C hergestellt.

Die Bestimmung der Wärmeformbeständigkeit nach Vicat B erfolgt gemäß DIN 53 460 (ISO 306) an Stäben der Abmessung 80 x 10 x 4 mm.

Zur Ermittlung der Bindenahtfestigkeit (aₙ) wird die Schlagzähigkeit nach DIN 53 453 an der Bindenaht von beidseitig ausgespritzten Prüfkörpern (Verarbeitungstemperatur 260°C) der Dimension 170 x 10 x 4 mm gemessen.

Das Spannungsrißverhalten (ESC-Verhalten) wird an Stäben der Abmessung 80 x 10 x 4 mm, Verarbeitungstemperatur 260°C, untersucht. Als Testmedium wird eine Mischung aus 60 Vol.-% Toluol und 40 Vol.-% Isopropanol verwendet. Die Probekörper werden mittels einer Kreisbogenschablone vorgedehnt (Vordehnung in Prozent) und bei Raumtemperatur im Testmedium gelagert. Das Spannungsrißverhalten wird über die Rißbildung bzw. den Bruch in Abhängigkeit von der Vordehnung im Testmedium beurteilt.

Das Brandverhalten der Proben wird nach UL-Subj. 94 V an Stäben der Abmessung 127 x 12,7 x 1,6 mm gemessen, hergestellt auf einer Spritzgußmaschine bei 260°C.

Der UL 94 V-Test wird wie folgt durchgeführt:
Substanzproben werden zu Stäben der Abmessungen 127 x 12,7 x 1,6 mm geformt. Die Stäbe werden vertikal so montiert, daß die Unterseite des Probekörpers sich 305 mm über einen Streifen Verbandstoff befindet. Jeder Probestab wird einzeln mittels zweier aufeinanderfolgender Zündvorgänge von 10 s Dauer entzündet, die Brenneigenschaften nach jedem Zündvorgang werden beobachtet und danach die Probe bewertet. Zum Entzünden der Probe wird ein Bunsenbrenner mit einer 100 mm (3,8 inch) hohen blauen Flamme von Erdgas mit einer Wärmeeinheit von 3,73 x 10⁴ kJ/m³ (1000 BTU per cubic foot) benutzt.

Die UL 94 V-O-Klassifizierung umfaßt die nachstehend beschriebenen Eigenschaften von Materialien, die gemäß der UL 94 V-Vorschrift geprüft werden. Die Formmassen in dieser Klasse enthalten keine Proben, die länger als 10 s nach jeder Einwirkung der Testflamme brennen; sie zeigen keine Gesamtflammzeit von mehr als 50 s bei der zweimaligen Flammeinwirkung auf jeden Probesatz; sie enthalten keine Proben, die vollständig bis hinauf zu der am oberen Ende der Probe befestigten Halteklammer abbrennen; sie weisen keine Proben auf, die die unterhalb der Probe angeordnete Watte durch brennende Tropfen oder Teilchen entzünden; sie enthalten auch keine Proben, die länger als 30 s nach Entfernen der Testflamme glimmen.

Andere UL 94-Klassifizierungen bezeichnen Proben, die weniger flammwidrig oder weniger selbstverlöschend sind, weil sie flammende Tropfen oder Teilchen abgeben. Diese Klassifizierungen werden mit UL 94 V-1 und V-2 bezeichnet. N.B. heißt "nicht bestanden" und ist die Klassifizierung von Proben, die eine Nachbrennzeit von ≥ 30 s aufweisen.

Zusammensetzung und Eigenschaften sind in der folgenden Tabelle zusammengestellt.

**Tabelle: Formmassen und ihre Eigenschaften**

| Beispiel | 1 |
|---|---|
| Komponenten [Gew.-Teile] | |
| A | 68,4 |
| Ba | 6,8 |
| C | 9,3 |
| D | 10,8 |
| E | 4,2 |
| Eigenschaften | |
| aₖ (ISO 180/1A) [kJ/m²) | 43,5 |
| Vicat B 120 [°C] | 116 |
| UL 94 V, 3,2 mm | V-O |
| aₙ Bindenaht [kJ/m²] | 4,9 |
| ESC-Verhalten | |
| Bruch bei εₓ [%] | 2,0 |

Bei Einsatz des speziellen, mittels eines Redox-Initiatorsystems hergestellten Pfropfpolymerisats in Polycarbonat-Formmassen zeigen sich in Gegenwart von Phosphonatamin als Flammschutzmittel gute mechanische Eigenschaften. Gute Werte für Kerbschlagzähigkeit (aₖ), Bindenahtfestigkeit sowie eine ausreichende Spannungsrißbeständigkeit sind Voraussetzungen für einen Einsatz in dünnwandigen Gehäuseteilen.

## Patentansprüche

1. Blends enthaltend
A) 40 bis 99 Gew.-Teile aromatisches Polycarbonat und/oder Polyestercarbonat
B) 0,5 bis 60 Gew.-Teile Pfropfpolymerisat, **dadurch gekennzeichnet, daß** die Pfropfpolymerisate B aus
B.1) 5 bis 95 Gew.-% einem oder mehreren Vinylmonomeren und
B.2) 95 bis 5 Gew.% eines oder mehrerer teilchenförmigen Dienkautschuke mit einer Glasumwandlungstemperatur <10°C, die durch Emulsionspolymerisation hergestellt sind,
wobei zur Pfropfpolymerisation ein Initiatorsystem aus einem organischen Hydroperoxid und Ascorbinsäure verwendet wird,
C) 0 bis 45 Gew.-Teile mindestens eines thermoplatischen Polymers ausgewählt aus der Gruppe der thermoplastischen Vinyl(co)polymerisate und Polyalkylenterephthalate,
D) 0,1 bis 30 Gew.-Teile eines Phosphonatamin der allgemeinen Formel (I)
A_{3-y}-N-B_{y} (I),
wobei
A für einen Rest der Formel (IIa) 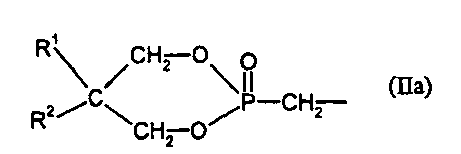 oder (IIb) 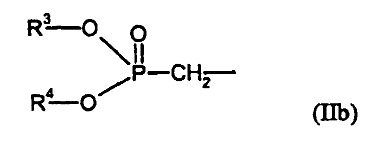 steht,
R¹ und R² unabhängig voneinander für unsubstituiertes oder substituiertes C₁-C₁₀-Alkyl oder für unsubstituiertes oder substituiertes C₆-C₁₀-Aryl, stehen,
R³ und R⁴ unabhängig voneinander für unsubstituiertes oder substituiertes C₁-C₁₀-Alkyl oder unsubstituiertes oder substituiertes C₆-C₁₀-Aryl stehen oder
R³ und R⁴ zusammen für unsubstituiertes oder substituiertes C₃-C₁₀-Alkylen stehen,
y die Zahlenwerte 0,1 oder 2 bedeuten und
B unabhängig für Wasserstoff, gegebenenfalls halogeniertes C₂-C₈-Alkyl, unsubstituiertes oder substituiertes C₆-C₁₀-Aryl steht,
E) 0 bis 5 Gew.-Teile fluoriertes Polyolefin,
wobei die Summe der Gew.-Teile aller Blendkomponenten 100 ergibt.

2. Blends gemäß Anspruch 1, enthaltend
60 bis 98,5 Gew.-Teile A,
1 bis 40 Gew.-Teile B,
0 bis 30 Gew.-Teile C,
2 bis 25 Gew.-Teile D,
0,1 bis 3 Gew.-Teile E.

3. Blends gemäß Anspruch 1 und 2, enthaltend 2 bis 25 Gew.-Teile C.

4. Blends gemäß der Ansprüche 1 bis 3, enthaltend 5 bis 20 Gew.-Teile D.

5. Blends gemäß der vorhergehenden Ansprüche, wobei Vinylmonomere B.1 Gemische sind aus
B.1.1 50 bis 99 Gew.-Teilen Vinylaromaten und/oder kernsubstituierten Vinylaromaten und/oder Methacrylsäure-(C₁-C₈)-Alkylester und
B.1.2 1 bis 50 Gew.-Teilen Vinylcyanide und/oder (Meth)Acrylsäure-(C₁-C₈)-Alkylester und/oder Derivate ungesättigter Carbonsäuren.

6. Blends gemäß der vorhergehenden Ansprüche, wobei die Pfropfgrundlage ausgewählt ist aus Dienkautschuken oder Gemischen von Dienkautschuken oder Copolymerisaten von Dienkautschuken oder deren Gemischen mit weiteren copolymerisierbaren Monomeren.

7. Blends gemäß der vorhergehenden Ansprüche, wobei die Pfropfgrundlage ein Polybutadienkautschuk ist.

8. Blends gemäß der vorhergehenden Ansprüche, wobei als Komponente B ein Pfropfpolymerisat aus
a) 40 bis 90 Gew.-% teilchenförmigen Dienkautschuks eines mittleren Teilchendurchmessers von 0,1 bis 0,6 µm und
b) 60 bis 10 Gew.-% Styrol, Acrylnitril, Methylmethacrylat oder Mischungen daraus durch Emulsions-Pfropfpolymerisation,
eingesetzt wird, die **dadurch gekennzeichnet ist, daß** man zur Pfropfpolymerisation ein Initiatorsystem aus einem organischen Hydroperoxid und Ascorbinsäure unter Erzielung einer Pfropfausbeute von >60 Gew.-% (bezogen auf eingesetzte Monomere B.1 bzw. b) verwendet.

9. Blends gemäß Anspruch 8, wobei die erzielte Pfropfausbeute >75 Gew.-% ist.

10. Blends gemäß Anspruch 8, wobei die erzielte Pfropfausbeute >85 Gew.-% ist.

11. Blends gemäß der vorhergehenden Ansprüche, wobei als Hydroperoxide Cumolhydroperoxid und/oder tert.-Butylhydroperoxid verwendet werden.

12. Blends nach einem oder mehreren der vorangegangenen Ansprüche, wobei die Phosphonatamine D) Verbindungen der Formel (I-2) sind, 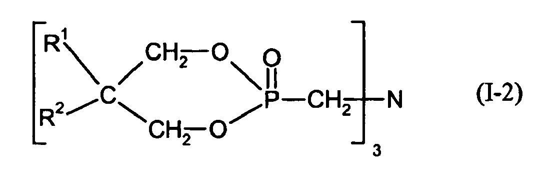 wobei
R¹ und R² die in Anspruch 1 angegebenen Bedeutungen haben.

13. Blends gemäß der vorhergehenden Ansprüche, enthaltend wenigstens ein Additiv ausgewählt aus der Gruppe der Gleit- und Entformungsmittel, Nukleiermittel, Antistatika, Stabilisatoren, Farbstoffe und Pigmente.

14. Blends gemäß der vorhergehenden Ansprüche, enthaltend weitere Flammschutzmittel, welche verschieden sind von Komponente D.

15. Verfahren zur Herstellung von Formmassen gemäß Anspruch 1, wobei die Komponenten A bis E und gegebenenfalls weiteren Zusätzen vermischt und schmelzcompoundiert werden.

16. Verwendung der Formmassen gemäß Anspruch 1 zur Herstellung von Formkörpern.

17. Formkörper, erhältlich aus Formmassen gemäß der Ansprüche 1 bis 15.

18. Gehäuseteile gemäß Anspruch 17.

## Claims

1. Blends containing
A) 40 to 99 parts by wt. of aromatic polycarbonate and/or polyestercarbonate,
B) 0.5 to 60 parts by wt. of a graft polymer, **characterised in that** the graft polymers B consist of
B.1) 5 to 95 wt.% of one or more vinyl monomers and
B.2) 95 to 5 wt.% of one or more particulate diene rubbers with a glass transition temperature of <10°C, which are prepared by emulsion polymerisation,
wherein an initiator system consisting of an organic hydroperoxide and ascorbic acid is used for graft polymerisation,
C) 0 to 45 parts by wt. of at least one thermoplastic polymer, selected from the group consisting of thermoplastic vinyl (co)polymers and polyalkylene terephthalates and
D) 0.1 to 30 parts by wt. of a phosphonate amine of the general formula (I)
A_{3-y}-N-B_{y} (I),
wherein
A represents a group of the formula (IIa) 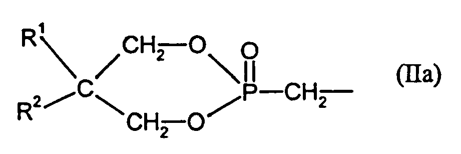 or (IIb) 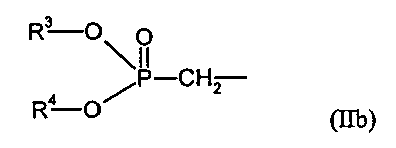
R¹ and R², independently, represent unsubstituted or substituted C₁-C₁₀ alkyl or unsubstituted or substituted C₆-C₁₀ aryl,
R³ and R⁴, independently, represent unsubstituted or substituted C₁-C₁₀ alkyl or unsubstituted or substituted C₆-C₁₀ aryl or
R³ and R⁴ together represent unsubstituted or substituted C₃-C₁₀ alkylene,
y has the numerical value 0, 1 or 2 and
B independently, represents hydrogen, optionally halogenated C₂-C₈ alkyl, unsubstituted or substituted C₆-C₁₀ aryl,
E) 0 to 5 parts by wt. of a fluorinated polyolefin
wherein the sum of the parts by wt. of all the blend components is 100.

2. Blends according to claim 1, containing
60 to 98.5 parts by wt. of A,
1 to 40 parts by wt. of B,
0 to 30 parts by wt. of C,
2 to 25 parts by wt. of D, and
0.1 to 3 parts by wt. of E.

3. Blends according to claims 1 and 2, containing 2 to 25 parts by wt. of C.

4. Blends according to claims 1 to 3, containing 5 to 20 parts by wt. of D.

5. Blends according to any of the preceding claims, wherein vinyl monomers B.1 are mixtures of
B.1.1 50 to 99 parts by wt. of vinyl aromatic compounds and/or ring-substituted vinyl aromatic compounds and/or (C₁-C₈) alkyl methacrylates and
B.1.2 1 to 50 parts by wt. of vinyl cyanides and/or (C₁-C₈) alkyl (meth)acrylates and/or derivatives of unsaturated carboxylic acids.

6. Blends according to any of the preceding claims, wherein the graft substrate is selected from diene rubbers or mixtures of diene rubbers or copolymers of diene rubbers or their mixtures with further copolymerisable monomers.

7. Blends according to any of the preceding claims, wherein the graft substrate is a polybutadiene rubber.

8. Blends according to any of the preceding claims, the component B used being a graft polymer of
a) 40 to 90 wt.% of particulate diene rubber with an average particle diameter of 0.1 to 0.6 µm and
b) 60 to 10 wt.% of styrene, acrylonitrile, methyl methacrylate or mixtures of these, produced by emulsion graft polymerisation,
which component B is **characterised in that** an initiator system comprising an organic hydroperoxide and ascorbic acid is used for graft polymerisation, a graft yield of >60 wt.% (relative to the monomers B.1 or b used) being obtained.

9. Blends according to claim 8, wherein the graft yield obtained is >75 wt.%.

10. Blends according to claim 8, wherein the graft yield obtained is >85 wt.%.

11. Blends according to any of the preceding claims, wherein cumyl hydroperoxide and/or tert.-butyl hydroperoxide are used as hydroperoxides.

12. Blends according to one or more of the preceding claims, wherein the phosphonate amines D) are compounds of the formula (I-2) 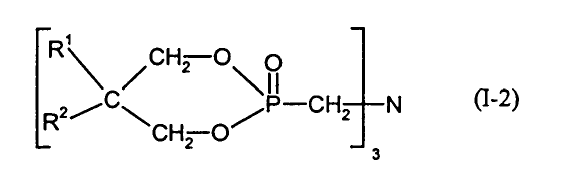 wherein
R¹ and R² have the meaning stated in claim 1.

13. Blends according to any of the preceding claims, containing at least one additive selected from the group consisting of lubricants and mould release agents, nucleating agents, antistatic agents, stabilisers, colorants and pigments.

14. Blends according to any of the preceding claims, containing further flame retardants which are different from component D.

15. A process for preparing moulding compositions according to claim 1,
wherein components A to E and optionally further additives are mixed and melt compounded.

16. Use of the moulding compositions according to claim 1 to produce moulded articles.

17. Moulded articles, obtainable from moulding compositions according to claims 1 to 15.

18. Housing parts according to claim 17.

## Revendications

1. Mélanges contenant
A) 40 à 99 parties en poids d'un polycarbonate et/ou polyester-carbonate aromatique
B) 0,5 à 60 parties en poids d'un polymère greffé, **caractérisés en ce que** les polymères greffés B ont été préparés à partir de
B.1) 5 à 95 % en poids d'un ou plusieurs monomères vinyliques et
B.2) 95 à 5 % en poids d'un ou plusieurs caoutchoucs diéniques à l'état de particules, ces caoutchoucs ayant une température de transition du second ordre inférieure à 10°C, et ayant été préparés par polymérisation en émulsion,
la polymérisation greffée ayant été réalisée à l'aide d'un système inducteur consistant en un hydroperoxyde organique et l'acide ascorbique,
C) 0 à 45 parties en poids d'au moins un polymère thermoplastique choisi dans le groupe des (co)polymères vinyliques thermoplastiques et des téréphtalates de polyalkylène,
D) 0,1 à 30 parties en poids d'une phosphonatamine de formule générale (I)
A_{3-y}-N-B_{y} (I),
dans laquelle
A représente un radical de formule (IIa) 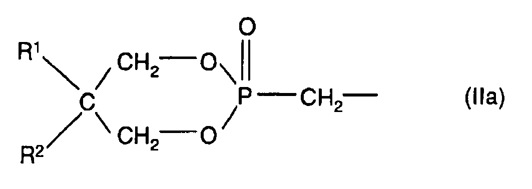 ou (IIb) 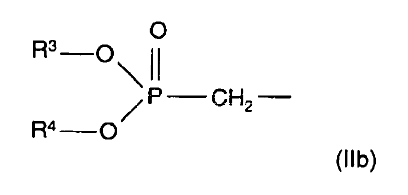
R¹ et R² représentent chacun, indépendamment l'un de l'autre, un groupe alkyle en C₁-C₁₀ substitué ou non ou un groupe aryle en C₆-C₁₀ substitué ou non,
R³ et R⁴ représentent chacun, indépendamment l'un de l'autre, un groupe alkyle en C₁-C₁₀ substitué ou non ou un groupe aryle en C₆-C₁₀ substitué ou non, ou bien
R³ et R⁴ forment ensemble un groupe alkylène en C₃-C₁₀ substitué ou non,
y est égal à 0, 1 ou 2 et
les symboles B représentent chacun, indépendamment les uns des autres, l'hydrogène, un groupe alkyle en C₂-C₈ éventuellement halogéné, un groupe aryle en C₆-C₁₀ substitué ou non,
E) 0 à 5 parties en poids d'une polyoléfine fluorée,
la somme des parties en poids de tous les composants des mélanges étant égale à 100.

2. Mélanges selon la revendication 1, contenant
60 à 98,5 parties en poids de A,
1 à 40 parties en poids de B,
0 à 30 parties en poids de C,
2 à 25 parties en poids de D,
0,1 à 3 parties en poids de E.

3. Mélanges selon les revendications 1 et 2, contenant 2 à 25 parties en poids de C.

4. Mélanges selon les revendications 1 à 3, contenant 5 à 20 parties en poids de D.

5. Mélanges selon les revendications qui précèdent, dans lesquels les monomères vinyliques B.1 sont des mélanges de
B.1.1 50 à 99 parties en poids de composés vinylaromatiques et/ou de composés vinylaromatiques substitués dans les noyaux et/ou de méthacrylates d'alkyle en C₁-C₈ et
B.1.2 1 à 50 parties en poids de cyanures de vinyle et/ou de (méth)acrylates d'alkyle en C₁-C₈ et/ou de dérivés d'acides carboxyliques Insaturés.

6. Mélanges selon les revendications qui précèdent, dans lesquels le support de greffage est choisi parmi les caoutchoucs diéniques, les mélanges de caoutchoucs diéniques ou les copolymères de caoutchoucs diéniques ou leurs mélanges avec d'autres monomères copolymérisables.

7. Mélanges selon les revendications qui précèdent dans lesquels le support de greffage est un caoutchouc de polybutadiène.

8. Mélanges selon les revendications qui précèdent dans lesquels le composant B est un polymère greffé de
a) 40 à 90 % en poids d'un caoutchouc diénique en particules, à un diamètre de particule moyen de 0,1 à 0,6 µm et
b) 60 à 10 % en poids de styrène, d'acrylonitrile, de méthacrylate de méthyle ou leurs mélanges, par polymérisation greffée en émulsion,
ce polymère greffé **se caractérisant en ce que**, pour la polymérisation greffée, on a utilisé un système inducteur consistant en un hydroperoxyde organique et l'acide ascorbique et on a atteint un rendement de greffage supérieur à 60 % en poids (par rapport aux monomères mis en oeuvre B.1 et b respectivement).

9. Mélanges selon la revendication 8, pour lesquels le rendement de greffage atteint est supérieur à 75 % en poids.

10. Mélanges selon la revendication 8, pour lesquels le rendement de greffage atteint est supérieur à 85 % en poids.

11. Mélanges selon les revendications qui précèdent, pour lesquels les hydroperoxydes utilisés ont été l'hydroperoxyde de cumène et/ou l'hydroperoxyde de tert-butyle.

12. Mélanges selon une ou plusieurs des revendications qui précèdent, dans lesquels les phosphanatamines D) sont des composés de formule (I-2), 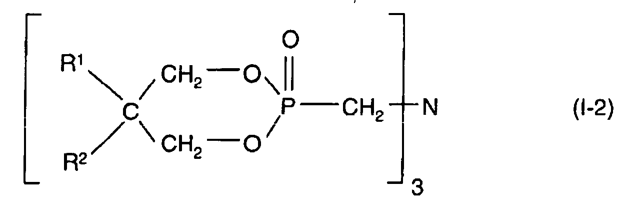 dans laquelle
R¹ et R² ont les significations indiquées dans la revendication 1.

13. Mélanges selon les revendications qui précèdent, contenant au moins un additif choisi dans le groupe des agents lubrifiants et agents de démoulage, des agents de nucléation, des agents antistatiques, des stabilisants, des colorants et pigments.

14. Mélanges selon les revendications qui précèdent, contenant des agents ignifugeants autres que le composant D.

15. Procédé pour la préparation des matières à mouler selon la revendication 1, consistant à mélanger et à homogénéiser à l'état fondu les composants A à E et le cas échéant d'autres additifs.

16. Utilisation des matières à mouler selon la revendication 1 pour la fabrication de corps moulés.

17. Corps moulés obtenus à partir des matières à mouler selon les revendications 1 à 15.

18. Pièces de logement selon la revendication 17.
